# EUROPÄISCHE PATENTSCHRIFT

(11) **EP 2 334 518 B1**
(45) Veröffentlichungstag und Bekanntmachung des Hinweises auf die Patenterteilung: **17.06.2015**
(21) Anmeldenummer: 09781778.7
(22) Anmeldetag: 13.08.2009
(51) Int. Cl.: B60R 21/013, B60R 21/01

(54) **STEUEREINRICHTUNG FÜR EIN SENSORSYSTEM, SENSORSYSTEM UND VERFAHREN ZUM ÜBERTRAGEN VON SIGNALEN IN EINEM SENSORSYSTEM**
CONTROL DEVICE FOR A SENSOR SYSTEM, SENSOR SYSTEM, AND METHOD FOR TRANSMITTING SIGNALS IN A SENSOR SYSTEM
DISPOSITIF DE COMMANDE POUR UN SYSTÈME DE DÉTECTION, SYSTÈME DE DÉTECTION ET PROCÉDÉ DE TRANSMISSION DE SIGNAUX DANS UN SYSTÈME DE DÉTECTION

(30) Priorität: 07.10.2008 DE 102008042641
(43) Veröffentlichungstag der Anmeldung: 22.06.2011
(73) Patentinhaber: Robert Bosch GmbH, 70442 Stuttgart (DE)
(72) Erfinder: Oechtering, Peter, 76229 Karlsruhe (DE); Walker, Steffen, 72770 Reutlingen (DE)
(86) Internationale Anmeldenummer: PCT/EP2009/060468
(87) Internationale Veröffentlichungsnummer: WO 2010/040587

(56) Entgegenhaltungen:
- EP-A- 0 798 895
- EP-A- 1 734 657
- DE-B4- 19 655 380

## Beschreibung

### Stand der Technik

Zur Übertragung von Daten peripherer Sensoren an eine zentrale Steuereinrichtung (ECU) wird in einigen Sensorsystemen, insbesondere Insassenschutzsystemen von Fahrzeugen, eine Stromschnittstelle verwendet; sie kann grundsätzlich unidirektional oder bidirektional sein. Die DE 10 2004 013 597 A1 zeigt ein derartiges Sensorsystem mit einer Steuereinrichtung und einem über eine unidirektionale Stromschnittstelle verbundenen Sensor, der auch unter der Bezeichnung PAS3 oder PAS4 bekannt ist. EP 1 734 657 A1 offenbart eine Einrichtung gemäß dem Oberbegriff des Anspruchs 1.

Die Stromversorgung wird bei derartigen Systemen von der als Empfänger dienenden Steuereinrichtung geliefert, die meist als spezifischer ASIC ausgebildet ist und einen Schnittstellenstrom ausgibt, der sich aus dem Sensorruhestrom (Schnittstellenruhestrom) und einem Sensordatenstrom zusammensetzt. Der Sensor moduliert somit in Abhängigkeit der Messungen seines Sensorelementes den Sensorruhestrom.

Für den Fall eines niederohmigen Kurzschlusses der Busleitung nach Masse kann der Empfänger mit einer Kurzschlussstrombegrenzungsschaltung ausgestattet sein.

Eine Begrenzung des Kurzschlussstroms auf einen zu niedrigen Wert kann jedoch dazu führen, dass der so begrenzte Kurzschlussstrom fälschlicherweise als Sensorsignal ausgelesen wird. Daher ist der Stromwert, auf den der Kurzschlussstrom begrenzt wird, im Allgemeinen hinreichend hoch gewählt, insbesondere größer als die Summe aus Sensorruhestrom und Sensordatenstrom, damit keine unerwünschten Eingriffe der Strombegrenzung in den Normalbetrieb auftreten.

Ein zu hoher kurzschlussbegrenzter Schnittstellenstrom begrenzt jedoch die maximale mögliche Verlustleistung des Empfängers und somit die Stromverfügbarkeit der Spannungsversorgung.

Somit ist die Anzahl der an eine Steuereinrichtung anzuschließenden Sensoren oftmals bereits dadurch begrenzt, dass im Falle von Kurzschlüssen an mehreren Sensorschnittstellen des Empfängers sehr hohe Gesamtströme von der Steuereinrichtung aufzubringen sind, was zu einer entsprechenden Dimensionierung des Empfängers führt.

### Offenbarung der Erfindung

Erfindungsgemäß wird eine zeitlich veränderliche, insbesondere mehrstufige Kurzschlussstrombegrenzung des Schnittstellenstroms geschaffen. Bei Erkennung eines Kurzschlusses, bei dem die von der Steuereinrichtung angelegte Spannung erkennbar zusammenbricht und der Schnittstellenstrom deutlich über der Summe des Sensorruhestroms und des maximalen Sensordatenstroms liegt, erfolgt zunächst eine Kurzschlussstrombegrenzung auf einen oberen Kurzschluss-Stromwert. Somit kann sichergestellt werden, dass kein Eingriff in den Normalbetrieb erfolgt. Diese Regelung auf den oberen Kurzschlussstromwert erfolgt jedoch nur innerhalb eines ersten Zeitraums, insbesondere eines vorgegebenen Zeitraums. Nach diesem ersten Zeitraum wird der Kurzschlussstrom auf einen kleineren, unteren Kurzschluss-Stromwert zurückgeregelt. Dieser untere Kurzschluss-Stromwert kann deutlich kleiner als der obere Kurzschluss-Stromwert gewählt werden, da der Fehler bereits erkannt wurde. Er wird vorzugsweise weiterhin größer als der Sensorruhestrom gewählt.

Erfindungsgemäß kann somit bei Kurzschlüssen, insbesondere auch bei statisch anliegenden Kurzschlüssen, die auftretende Stromaufnahme und folglich die Verlustleistung reduziert und auf einen hinreichend kleinen Wert eingestellt werden. Es kann insbesondere bei Auslegung einer Empfängereinrichtung, z.B. einer Steuereinrichtung eines Insassenschutzsystems, der untere Kurzschluss-Stromwert derartig eingestellt werden, dass auch bei mehreren durch Kurzschlüsse außer Betrieb gesetzter Sensoren eine hinreichende Stromversorgung der weiteren Sensoren erfolgt.

Somit kann eine bestimmte Anzahl von Sensorschnittstellen des Empfängers im Kurzschluss betrieben werden, ohne eine Bauteilzerstörung zu verursachen oder die Spannungsversorgung zu überlasten. Der Chipflächenaufwand kann somit begrenzt werden.

### Kurze Beschreibung der Ausführungsform

- Fig. 1: zeigt ein Blockschaltbild eines erfindungsgemäßen Sensorsystems mit einer Steuereinrichtung und einem Sensor;
- Fig. 2: Zeitdiagramme der auf dem Bus anliegenden Spannung des über den Bus fließenden Stroms.

### Ausführungsformen der Erfindung

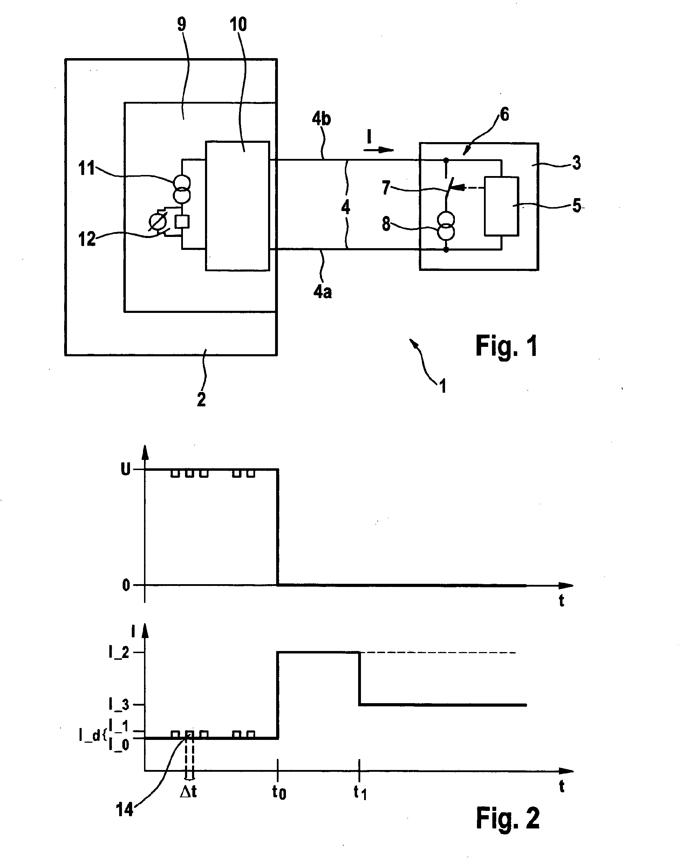

Gemäß Fig. 1 wird ein Sensorsystem 1 im Wesentlichen gebildet aus einer Steuereinrichtung 2 und einem Sensor 3, die über eine Datenverbindung 4 miteinander verbunden sind. Die erfindungsgemäße Steuereinrichtung 2 kann hierbei z. B. durch ein einzelnes Steuergerät oder auch durch mehrere zusammenwirkende Steuergeräte gebildet werden.

Das Sensorsystem 1 kann insbesondere ein Insassenschutzsystem oder Teil eines Insassenschutzsystems eines Fahrzeuges sein, an dessen zentrale Steuereinrichtung 2 mehrere Sensoren 3 angeschlossen sind. Die Datenverbindung 4 ist insbesondere als unidirektionale Stromschnittstelle ausgebildet, z. B. ein Bus 4, der als Zweidraht-Bus mit den Leitungen 4a, 4b ausgebildet ist und z.B. unter den Bezeichnungen PAS3 oder PAS4 bekannt ist.

Der Einfachheit halber ist hier lediglich ein einziger an die Steuereinrichtung 2 angeschlossener Sensor 3 gezeigt. Der Sensor 3 ist z.B. ein Beschleunigungssensor zur Messung der Beschleunigung in einer vorgegebenen Richtung. Der Sensor 3 weist hierbei ein Sensorelement 5, das in Abhängigkeit seiner Messung den Schnittstellenstrom I auf dem Bus 4 beeinflusst. Gemäß Fig. 1 kann hierzu in dem Sensor 3 eine Strommodulationsschaltung 6 vorgesehen sein, bei der das Sensorelement 5 direkt von dem Bus 4 gespeist wird, so dass keine separate Energieversorgung in dem Sensor 3 vorgesehen ist und das Sensorelement 5 in Abhängigkeit seiner Messung einen Schalter 7 öffnet und schließt, der über eine Stromsenke 8, die z.B. eine geeignete Transistorschaltung oder auch ein hoher ohmscher Widerstand sein kann, eine Verbindung zwischen den Leitungen 4a, 4b schließt, so dass ein digitales Signal 14, insbesondere Sensorsignal 14, auf den Bus 4 moduliert wird. Dies ist aus Fig. 2 ersichtlich, die ein entsprechendes Zeitdiagramm der an dem Bus 4 anliegenden Spannung U sowie der auf dem Bus 4, d.h. über die beiden Leitungen 4a, 4b fließenden Stromstärke des Schnittstellenstroms I in Abhängigkeit der Zeit t zeigt. Hierbei werden einem Sensorruhestrom I_0 die Signale 14 als Datenströme I_d überlagert, so dass sich ein Signalstrom I_1 = I_0 + I_d ergibt.

Die digitalen Signale 14 weisen Peakbreiten Δt von z. B. etwa 1 µs (Mikrosekunden) auf, wobei bei einem Sensorruhestrom I_0 von z. B. 4.. 35 mA und einem überlagerten Datenstrom von I_d = von 22 ... 30 mA sich somit z. B. obere Signalstromwerte von I_1= 65 mA ergeben. Der gesamte Schnittstellenstrom I nimmt somit im ordnungsgemäßen Betrieb maximal den aus der Summe des Sensorruhestroms I_0 und dem Datenstrom I_d gebildeten Wert I_1 an.

Die Steuereinrichtung 2 weist eine Anschlusseinrichtung 9 für den Bus 4 auf. Erfindungsgemäß ist in der Anschlusseinrichtung 9 eine Strombegrenzungsschaltung 10 vorgesehen, die im Falle eines Kurzschlusses, bei der an einer oder beiden Leitungen 4a oder 4b ein Kurzschluss auftritt, z.B. ein niederohmiger Kontakt nach Masse, der Schnittstellenstrom I als Kurzschlussstrom begrenzt wird. Weiterhin sind in der Anschlusseinrichtung 9 eine Stromquelle 11 zur Erzeugung des Schnittstellenstroms I sowie eine Detektionseinrichtung 12 zur Detektion der digitalen Signale 14 vorgesehen, die z. B. in an sich bekannter Weise einen Spannungsabfall an einem Widerstand misst.

Zu einem Zeitpunkt t0 tritt ein Kurzschluss nach Masse auf, so dass U von dem Wert U1 auf 0 fällt und während des Kurzschlusses auf 0 bleibt. Gemäß Fig. 2 wird die in der Steuereinrichtung 2 vorgesehene Strombegrenzungsschaltung 10 bei dem Kurzschluss wirksam, so dass I unmittelbar auf einen relativ hohen oberen Kurzschluss-Stromwert I_2 begrenzt wird. Herkömmlicherweise würde während des Kurzschlusses der Strom auf diesen Wert I_2 begrenzt bleiben, wie durch die gestrichelte Linie angedeutet ist. Erfindungsgemäß wird jedoch nach einem Zeitraum t1-t0, d.h. bei Festsetzung von t0= 0 nach der Zeit t1, der Kurzschlussstrom I auf einen unteren Kurzschluss-Stromwert I_3 abgeregelt, der kleiner als der obere Wert I_2 ist, jedoch zumindest oberhalb vom Sensorruhestrom I_0, vorzugsweise - aber nicht zwingend - auch oberhalb des Signalstroms I_1 bzw. oberhalb eines oberen Signalstroms liegt, sich aus der Summe des Sensorruhestrom I_0 und einem Maximalwert des Datenstroms I_d ergibt.

Solange der Kurzschluss anliegt, fließt somit nur der Kurzschlussstrom I_3. Dieser Kurzschlussstrom I_3 kann nicht fälschlicherweise als Signal fehlerkannt werden, wenn I_3 größer I_1 ist; grundsätzlich ist eine Ausbildung I_3 größer I_0 erfindungsgemäß jedoch ausreichend.

t1 kann z.B. als 10 µs (Mikrosekunden) ausgelegt werden. Somit kann t1 z.B. die zehnfache Bitlänge sein, so dass der sich in Fig. 2 ergebende Strom-Peak im Kurzschlussstrom auch von der Zeitlänge her nicht fehlinterpretiert werden kann.

Das erfindungsgemäße Sensorsystem 1 weist somit im Falle eines Kurzschlusses eine kleinere Stromaufnahme und somit kleinere Verlustleistung auf. Somit kann die Anzahl der Sensorschnittstellen der Steuereinrichtung 2 entsprechend hoch gewählt werden, ohne die Spannungsversorgung bei mehreren gleichzeitigen Kurzschlüssen an mehreren Sensoren 3 zu überlasten.

## Patentansprüche

1. Steuereinrichtung (2) für ein Sensorsystem (1) eines Insassenschutzsystems, wobei die Steuereinrichtung (2) mindestens aufweist:
eine Anschlusseinrichtung (9) zum Anschluss einer Datenverbindung (4) mit mindestens zwei Leitungen (4a, 4b) als Stromschnittstelle zu mindestens einem Sensor (3),
wobei die Anschlusseinrichtung (9) über die Datenverbindung (4) von dem Sensor (3) durch Strommodulation eines Schnittstellenstroms (I) erzeugte Signale (14) aufnimmt,
wobei die Steuereinrichtung (2) eine Strombegrenzungsschaltung (10) aufweist, die bei einem Kurzschluss auf mindestens einer Leitung (4a, 4b) der Datenverbindung (4) einen Kurzschlussstrom (I_2, I_3) begrenzt,
wobei die Strombegrenzungsschaltung (10) den Kurzschlussstrom (I_2, I_3) zeitlich veränderlich begrenzt,
**dadurch gekennzeichnet dass** die Strombegrenzungsschaltung (10) bei einem Kurzschluss den Schnittstellenstrom (I) in einem ersten Zeitraum (t1 - t0) auf einen oberen Kurzschluss-Stromwert (I_2) und nach dem ersten Zeitraum (t1 - t0) auf einen unteren Kurzschluss-Stromwert (I_3) begrenzt.

2. Steuereinrichtung nach Anspruch 1, **dadurch gekennzeichnet, dass** der untere Kurzschluss-Stromwert (I_3) kleiner als der obere Kurzschluss-Stromwert (I_2) und größer als ein Sensorruhestrom (I_0) ist.

3. Steuereinrichtung nach Anspruch 2, **dadurch gekennzeichnet, dass** der untere Kurzschluss-Stromwert (I_3) größer als ein oberer Signalstrom (I_1) ist, der sich als Summe des Sensorruhestroms (I_0) und des Maximums eines über die Datenverbindung (4) übertragenen Sensordatenstroms (I_d) ergibt.

4. Steuereinrichtung nach Anspruch 2 oder 3, **dadurch gekennzeichnet, dass** die Signale (14) digital sind und der erste Zeitraum (t1 - t0) ein Mehrfaches, z. B. mindestens Achtfaches, z. B. mindestens Zehnfaches, der Signalbreite (Δt) der Signale (14) ist.

5. Steuereinrichtung nach einem der vorherigen Ansprüche, **dadurch gekennzeichnet, dass** die Anschlusseinrichtung (9) eine Detektionseinrichtung (12) zur Detektion der Signale (14) aufweist.

6. Steuereinrichtung nach einem der vorherigen Ansprüche, **dadurch gekennzeichnet, dass** die Datenverbindung (4) ein Zweidraht-Bus (4) mit genau zwei Leitungen (4a, 4b) ist.

7. Sensorsystem (1), das aufweist:
eine Steuereinrichtung (2) nach einem der vorherigen Ansprüche,
eine Datenverbindung (4) mit mindestens zwei Leitungen (4a, 4b) als Stromschnittstelle, und
mindestens einen Sensor (3) mit einem Sensorelement (5) und einer von dem Sensorelement (5) angesteuerten Strommodulationsschaltung (6) zum Strommodulieren von Signalen (4) auf einen über die Datenverbindung (4) übertragenen Schnittstellenstrom (I),
wobei die Steuereinrichtung (2) die auf den Schnittstellenstrom (I) modulierten Signale (14) ausliest.

8. Sensorsystem nach Anspruch 7, **dadurch gekennzeichnet, dass** der mindestens eine Sensor (3) frei von einer eigenen Energieversorgung ist und nur über den Schnittstellenstrom (I) mit Energie versorgt ist.

9. Sensorsystem nach Anspruch 7 oder 8, **dadurch gekennzeichnet, dass** die Datenverbindung (4) unidirektional ist und nur Signale (14) von dem mindestens einen Sensor (3) zu der Steuereinrichtung (2) übertragen werden.

10. Sensorsystem nach einem der Ansprüche 7 bis 9, **dadurch gekennzeichnet, dass** es Teil eines ein Insassenschutzsystems eines Fahrzeuges, z.B. eines Airbagsystems ist.

11. Verfahren zum Übertragen von Signalen (14) in einem Sensorsystem (1) eines Insassenschutzsystems, bei dem
eine Steuereinrichtung (2) einen Sensorruhestrom (I_0) auf eine als Stromschnittstelle wirkende Datenverbindung (4) ausgibt,
mindestens ein Sensor (3) durch Strommodulation des Sensorruhestroms (I_0) Signale (14) auf die Datenverbindung (4) ausgibt, und die Steuereinrichtung (2) die strommodulierten Signale (14) ausliest,
wobei bei einem Kurzschluss auf mindestens einer Leitung (4a, 4b) der Datenverbindung (4) die Steuereinrichtung (2) einen Schnittstellenstrom (I) zeitlich veränderlich begrenzt, die Strombegrenzungsschaltung (10) bei einem Kurzschluss den Schnittstellenstrom (I) in einem ersten Zeitraum (t1 - t0) auf einen oberen Kurzschluss-Stromwert (I_2) und nach dem ersten Zeitraum (t1 - t0) auf einen unteren Kurzschluss-Stromwert (I_3) begrenzt.

12. Verfahren nach Anspruch 11, **dadurch gekennzeichnet, dass** bei einem Kurzschluss der Schnittstellenstrom (I) in einem ersten Zeitraum (t1 - t0) auf einen oberen Kurzschluss-Stromwert (I_2) und nach dem ersten Zeitraum (t1 - t0) auf einen unteren Kurzschluss-Stromwert (13) begrenzt wird,
wobei der untere Kurzschluss-Stromwert (I_3) kleiner als der obere Kurzschluss-Stromwert (I_2) und größer als ein Sensorruhestrom (I_0) ist.

13. Verfahren nach Anspruch 12, **dadurch gekennzeichnet, dass** der untere Kurzschluss-Stromwert (I_3) größer als ein Signalstrom (I_1) ist, der bei Modulation des Sensorruhestroms (I_0) mit den Signalen (14) auftritt.

## Claims

1. Control device (2) for a sensor system (1) of an occupant protection system, the control device (2) at least having:
a connection device (9) for connecting a data link (4) having at least two lines (4a, 4b) as a current interface to at least one sensor (3),
the connection device (9) receiving, via the data link (4), signals (14) generated by the sensor (3) by subjecting an interface current (I) to current modulation,
the control device (2) having a current limitation circuit (10) which limits a short-circuit current (I_2, I_3) in the event of a short circuit on at least one line (4a, 4b) of the data link (4),
the current limitation circuit (10) limiting the short-circuit current (I_2, I_3) in a temporally variable manner,
**characterized in that**, in the event of a short circuit, the current limitation circuit (10) limits the interface current (I) to an upper short-circuit current value (I_2) in a first period (t1-t0) and limits the interface current (I) to a lower short-circuit current value (I_3) after the first period (t1-t0).

2. Control device according to Claim 1, **characterized in that** the lower short-circuit current value (I_3) is less than the upper short-circuit current value (I_2) and greater than a sensor quiescent current (I_0).

3. Control device according to Claim 2, **characterized in that** the lower short-circuit current value (I_3) is greater than an upper signal current (I_1) which results as the sum of the sensor quiescent current (I_0) and the maximum of a sensor data current (I_d) transmitted via the data link (4).

4. Control device according to Claim 2 or 3, **characterized in that** the signals (14) are digital and the first period (t1-t0) is a multiple, for example at least eight times, for example at least ten times, the signal width (Δt) of the signals (14).

5. Control device according to one of the preceding claims, **characterized in that** the connection device (9) has a detection device (12) for detecting the signals (14).

6. Control device according to one of the preceding claims, **characterized in that** the data link (4) is a two-wire bus (4) having precisely two lines (4a, 4b).

7. Sensor system (1) having:
a control device (2) according to one of the preceding claims,
a data link (4) having at least two lines (4a, 4b) as a current interface, and
at least one sensor (3) having a sensor element (5) and a current modulation circuit (6) which is controlled by the sensor element (5) and is intended to subject signals (14) to current modulation onto an interface current (I) transmitted via the data link (4),
the control device (2) reading the signals (14) modulated onto the interface current (I).

8. Sensor system according to Claim 7, **characterized in that** the at least one sensor (3) is free of its own energy supply and is supplied with energy only via the interface current (I).

9. Sensor system according to Claim 7 or 8, **characterized in that** the data link (4) is unidirectional and only signals (14) are transmitted from the at least one sensor (3) to the control device (2).

10. Sensor system according to one of Claims 7 to 9, **characterized in that** it is part of an occupant protection system of a vehicle, for example an airbag system.

11. Method for transmitting signals (14) in a sensor system (1) of an occupant protection system, in which
a control device (2) outputs a sensor quiescent current (I_0) to a data link (4) acting as a current interface,
at least one sensor (3) outputs signals (14) to the data link (4) by subjecting the sensor quiescent current (I_0) to current modulation, and the control device (2) reads the current-modulated signals (14),
the control device (2) limiting an interface current (I) in a temporally variable manner in the event of a short circuit on at least one line (4a, 4b) of the data link (4), in which case, in the event of a short circuit, the current limitation circuit (10) limits the interface current (I) to an upper short-circuit current value (I_2) in a first period (t1-t0) and limits the interface current (I) to a lower short-circuit current value (I_3) after the first period (t1-t0).

12. Method according to Claim 11, **characterized in that**, in the event of a short circuit, the interface current (I) is limited to an upper short-circuit current value (I_2) in a first period (t1-t0) and is limited to a lower short-circuit current value (I_3) after the first period (t1-t0),
the lower short-circuit current value (I_3) being less than the upper short-circuit current value (I_2) and greater than a sensor quiescent current (I_0).

13. Method according to Claim 12, **characterized in that** the lower short-circuit current value (I_3) is greater than a signal current (I_1) which occurs when the sensor quiescent current (I_0) is modulated with the signals (14).

## Revendications

1. Dispositif de commande (2) destiné à un système de capteur (1) d'un système de protection du passager, dans lequel le dispositif de commande (2) comprend au moins :
un dispositif de connexion (9) destiné à connecter une liaison de données (4) comportant au moins deux lignes (4a, 4b) en tant qu'interface de courant à au moins un capteur (3),
dans lequel le dispositif de connexion (9) reçoit par l'intermédiaire de la liaison de données (4) en provenance du capteur (3) des signaux (14) générés par modulation de courant d'un courant d'interface (I),
dans lequel le dispositif de commande (2) comprend un circuit limiteur de courant (10) qui limite un courant de court-circuit (I_2, I_3) lors d'un court-circuit sur au moins une ligne (4a, 4b) de la liaison de données (4),
dans lequel le circuit limiteur de courant (10) limite de manière variable dans le temps le courant de court-circuit (I_2, I_3),
**caractérisé en ce que**, lors d'un court-circuit, le circuit limiteur de courant (10) limite le courant d'interface (I), au cours d'un premier intervalle de temps (t1 - t0) à une valeur de courant de court-circuit supérieure (I_2) et après le premier intervalle de temps (t1 - t0), à une valeur de courant de court-circuit inférieure (I_3).

2. Dispositif de commande selon la revendication 1, **caractérisé en ce que** la valeur de courant de court-circuit inférieure (I_3) est inférieure à la valeur de courant de court-circuit supérieure (I_2) et est supérieure à un courant de repos de capteur (I_0).

3. Dispositif de commande selon la revendication 2, **caractérisé en ce que** la valeur de courant de court-circuit (I_3) est supérieure à un courant de signal supérieur (I_1) qui est obtenu comme étant la somme du courant de repos de capteur (I_0) et du maximum d'un courant de données de capteur (I_d) transmis par l'intermédiaire de la liaison de données (4).

4. Dispositif de commande selon la revendication 2 ou 3, **caractérisé en ce que** les signaux (14) sont numériques et **en ce que** le premier intervalle de temps (t1 - t0) est un multiple, par exemple au moins d'un facteur huit, par exemple au moins d'un facteur dix, de la largeur de signal (Δt) des signaux (14).

5. Dispositif de commande selon l'une quelconque des revendications précédentes, **caractérisé en ce que** le dispositif de connexion (9) comprend un dispositif de détection (12) destiné à détecter les signaux (14).

6. Dispositif selon l'une quelconque des revendications précédentes, **caractérisé en ce que** la liaison de données (4) est un bus à deux fils (4) comportant exactement deux lignes (4a, 4b).

7. Système de capteur (1), comprenant :
un dispositif de commande (2) selon l'une quelconque des revendications précédentes, une liaison de données (4) comportant au moins deux lignes (4a, 4b) en tant qu'interface de courant, et
au moins un capteur (3) comportant un élément de capteur (5) et un circuit de modulation de courant (6) attaqué par l'élément de capteur (5), destiné à soumettre à une modulation de courant des signaux (14) sur un courant d'interface (I) transmis par l'intermédiaire de la liaison de données (4),
dans lequel le dispositif de commande (2) lit les signaux (14) modulés sur le courant d'interface (I).

8. Système de capteur selon la revendication 7, **caractérisé en ce que** l'au moins un capteur (3) est dépourvu d'une alimentation en énergie qui lui est propre et n'est alimenté en énergie que par l'intermédiaire du courant d'interface (I).

9. Système de capteur selon la revendication 7 ou 8, **caractérisé en ce que** la liaison de données (4) est unidirectionnelle et **en ce que** seuls des signaux (14) sont transmis de l'au moins un capteur (3) au dispositif de commande (2).

10. Système de capteur selon l'une quelconque des revendications 7 à 9, **caractérisé en ce qu'**il s'agit d'une partie d'un système de protection du passager d'un véhicule automobile, par exemple d'un système de coussin de sécurité gonflable.

11. Procédé destiné à transmettre des signaux (14) dans un système de capteur (1) d'un système de protection du passager, dans lequel
un dispositif de commande (2) délivre un courant de repos de capteur (I_0) sur une liaison de données (4) jouant le rôle d'interface de courant,
au moins un capteur (3) délivre des signaux (14) sur la liaison de données (4) par modulation de courant du courant de repos de capteur (I_0), et le dispositif de commande (2) lit les signaux (14) soumis à modulation de courant,
dans lequel, lors d'un court-circuit sur au moins une ligne (4a, 4b) de la liaison de données (4), le dispositif de commande (2) limite de manière variable dans le temps un courant d'interface (I), le circuit limiteur de courant (10), lors d'un court-circuit, limite le courant d'interface (I) au cours d'un premier intervalle de temps (t1 - t0) à une valeur de courant de court-circuit supérieure (I_2) et après le premier intervalle de temps (t1 - t0), à une valeur de courant de court-circuit inférieure (I_3).

12. Procédé selon la revendication 11, **caractérisé en ce que**, lors d'un court-circuit, le courant d'interface (I), au cours d'un premier intervalle de temps (t1 - t0), est limité à une valeur de courant de court-circuit supérieure (I_2) et, après le premier intervalle de temps (t1 - t0), à une valeur de courant de court-circuit inférieure (I_3), dans lequel la valeur de courant de court-circuit inférieure (I_3) est inférieure à la valeur de courant de court-circuit supérieure (I_2) et est supérieure à un courant de repos de capteur (I_0).

13. Procédé selon la revendication 12, **caractérisé en ce que** la valeur de courant de court-circuit inférieure (I_3) est supérieure à un courant de signal (I_1) qui apparaît lors de la modulation du courant de repos de capteur (I_0) par les signaux (14).
